# EUROPÄISCHE PATENTSCHRIFT

(11) **EP 0 912 958 B1**
(45) Veröffentlichungstag und Bekanntmachung des Hinweises auf die Patenterteilung: **17.10.2001**
(21) Anmeldenummer: 97934505.5
(22) Anmeldetag: 21.07.1997
(51) Int. Cl.: G06K 7/00

(54) **CHIPKARTEN-LESEGERÄT**
CHIP CARD READER
LECTEUR DE CARTES A PUCE

(30) Priorität: 20.07.1996 DE 19629351
(43) Veröffentlichungstag der Anmeldung: 06.05.1999
(73) Patentinhaber: SCM Microsystems GmbH, 85279 Pfaffenhofen (DE)
(72) Erfinder: NEIFER, Wolfgang, D-85354 Freising (DE); SCHNEIDER, Robert, D-85279 Pfaffenhofen (DE)
(74) Vertreter: Degwert, Hartmut, Dipl.-Phys.
(86) Internationale Anmeldenummer: EP9703912
(87) Internationale Veröffentlichungsnummer: WO9803931

(56) Entgegenhaltungen:
- EP-A- 0 704 820
- DE-U- 29 505 678

## Beschreibung

Die Erfindung betrifft ein Chipkarten-Lesegerät, das aus einem mobilen Lesemodul und einer in einen Aufnahmeschacht eines Computers einsteckbaren Hülle besteht, in die der Lesemodul einschiebbar ist.

Chipkarten-Lesemodule sind aus der älteren, nicht vorveröffentlichten DE 196 04 031.0-53 bekannt. Sie werden als in einen entsprechenden Aufnahmekanal eines Computers einsteckbare Schnittstellen zwischen einem Computer und einer Chipkarte verwendet. Somit wird über derartige Lesemodule ein unmittelbarer Datentransfer von einem Computer auf eine Chipkarte bzw. von einer Chipkarte auf einen Computer ermöglicht.

Auf Chipkarten können Daten für unterschiedlichste Zwecke, wie z.B. zum Telefonieren, zum Steuern, zum Kontoführen, zum Sicherungsprüfen usw. gespeichert werden. Die Chipkarten haben meist das übliche Kreditkarten-Standardformat und können von Chipkartenlesern unterschiedlichster Bauformen gelesen werden. Hierbei sind auch separate Chipkartenleser bekannt, die an einen Computer angeschlossen werden, um Daten der Chipkarte in den Computer zu übertragen. Derartige separat angeordnete Geräte bedürfen jedoch einer Anschlußleitung und eines Anschlußsteckers und sind aufgrund ihrer Größe unhandlich und aufgrund der ungeschützten Steckverbindungen störanfällig.

Das aus der DE 196 04 031.0-53 bekannte Chipkarten-Lesemodul löst die Aufgabe, eine kleine und handliche Schnittstelle zwischen einer Chipkarte und einem Computer bereitzustellen, bei der die Sicherheit des Datentransfers mit dem Computer verbessert ist.

Aufgabe der vorliegenden Erfindung ist es, das Chipkarten-Lesemodul noch kleiner und leichter zu machen.

Diese Aufgabe wird erfindungsgemäß gelöst durch eine Aufteilung des Lesegeräts in einen mobilen Lesemodul und eine Hülle, in die der Lesemodul einschiebbar ist und die im Aufnahmeschacht des Computers eingesteckt verbleiben kann.

Bevorzugte Ausgestaltungen der Erfindung sind Gegenstand der Unteransprüche.

Bei dem erfindungsgemäßen Chipkarten-Lesemodul wird also erreicht, daß das aus der DE 196 04 031.0-53 bekannte Chipkarten-Lesemodul in zwei Einheiten aufgeteilt wird, wobei das erfindungsgemäße Chipkarten-Lesemodul die erste Einheit und die erfindungsgemäße Hülle des Chipkarten-Lesemoduls die zweite Einheit bildet. Die zweite Einheit ist dabei so ausgebildet, daß sie permanent in der Aufnahmeöffnung eines Computers eingeführt verbleiben kann. Aufgrund dieses Umstandes ist es möglich, das erfindungsgemäße Chipkarten-Lesemodul, das als solches nicht direkt in den Computer sondern in die zweite Einheit eingeführt wird, noch kleiner und leichter als im Stand der Technik auszubilden.

Durch das erfindungsgemäße Chipkarten-Lesemodul werden neue Dienstleistungen und Arbeiten mit Hilfe eines besonders leichten und platzsparenden Chipkarten-Moduls ermöglicht, insbesondere Datenübertragungen, wie elektronische Geldüberweisungen, Zugangssicherungen, Übertragungen medizinischer Daten oder das Übertragen von Computerdateien von einem Computer auf eine Chipkarte bzw. in umgekehrter Richtung. Darüber hinaus bietet das erfindungsgemäße Chipkarten-Lesemodul gemäß bevorzugter Ausführungsformen den Vorteil, daß es sowohl als kontaktierendes [ICC, integrated circuit card] als auch als kontaktloses [CICC, contactless integrated circuit card] Chipkarten-Lesemodul verwendet werden kann.

Gemäß einer bevorzugten Ausführungsform des erfindungsgemäßen Chipkarten-Lesemoduls sind am Ende des vorderen Bereichs des die Chipkarte aufnehmenden Kanals zwei im Querschnitt dreiecksförmige Nasen angeordnet, deren jeweils nach innen weisende Flächen an den abgerundeten Eckseiten der eingeschobenen Chipkarte zu liegen kommen. Durch diese Nasen wird eine seitliche Fixierung der Chipkarte in dem die Chipkarte aufnehmenden Kanal erreicht, so daß die Chipkarte bei Angrenzen an diese Nasen unverrückbar in dem die Chipkarte aufnehmenden Kanal zu liegen kommen.

Gemäß einer wichtigen Ausführungsform des erfindungsgemäßen Chipkarten-Lesemoduls weist die das Gegenstück zum Chipkarten-Lesemodul bildende Hülle an dem den Kragen gegenüberliegenden Ende des Aufnahmekanals eine Einrast/Auswurf-Einrichtung auf. Durch diese Einrichtung wird ein Einrasten eines eingeführten Chipkarten-Lesemoduls in der Hülle in der gewünschten Position bewirkt, in der der Kragen der Hülle mit dem hinteren Bereich des Chipkarten-Lesemoduls eine Einheit bildet, deren Höhe und Breite jeweils größer als diejenigen der Aufnahmeöffnung des Computers sind. Zum anderen wird durch diese Einrichtung durch einen von außen auf das eingeschobene Chipkarten-Lesemodul ausgeübten Druck in der Richtung des Aufnahmekanals der Hülle bewirkt, daß das Chipkarten-Lesemodul aus der Hülle ausgeworfen wird.

In dem erfindungsgemäßen Chipkarten-Lesemodul ist grundsätzlich eine von einer Batterie geschweißte, mit einem den Chip der Chipkarte kontaktierenden Lesekopf verbundene CPU vorgesehen. Diese CPU kann gemäß einer bevorzugten Ausführungsform zum Zweck der Abfrage von auf der Chipkarte gespeicherten Daten mit einer Anzeige verbunden sein, die über einen Schalter oder Shift-Knopf steuerbar ist. Dadurch wird erreicht, daß der Inhaber des Chipkarten-Lesemoduls jederzeit bestimmte in den Chip gespeicherte Daten ohne Zuhilfenahme weiterer Mittel abfragen kann.

Die Chipkarte weist auf einer ihrer Oberflächen eine mit der CPU verbundene Modulkontaktfläche auf, die bei den in den Aufnahmekanal der Hülle eingeschobenen Zustand mit einer entsprechenden Hüllenkontaktfläche einer Innenfläche des Aufnahmekanals in Kontakt tritt. Die CPU dient dabei als Umschaltanordnung zum Liefern elektrischer Datensignale von der Kontaktfläche des Chips zu der Modulkontaktfläche des Chipkarten-Lesemoduls. Dadurch wird erreicht, daß zur Herstellung eines elektrischen Kontaktes zum Zweck der Übertragung von Datensignalen von dem Chipkarten-Lesemodul zur Hülle und in umgekehrter Richtung immer die entsprechenden Kontaktflächen des Moduls bzw. der Hülle Verwendung finden. Um einen Verschleiß so gering wie möglich zu halten, sind die Modulkontaktfläche und die Hüllenkontaktfläche gemäß bevorzugter Ausführungsformen größer und/oder robuster als die Kontaktflächen des Chips ausgebildet.

Um einen sowohl sicheren als auch weichen Kontakt zwischen der Modulkontaktfläche und der Hüllenkontaktfläche herzustellen, stehen die Modulkontaktfläche und die Hüllenkontaktfläche in einem gleichen spitzen Winkel zu einer Oberfläche des Chipkarten-Lesemoduls bzw. zu einer der Innenflächen der Hülle.

Um sicherzustellen, daß die Modulkontaktfläche in eingeschobenem Zustand des Chipkarten-Lesemoduls immer mit der Hüllenkontaktfläche kontaktiert, ist mindestens eine Oberfläche des Chipkarten-Lesemoduls in mindestens zwei Bereiche mit unterschiedlichen Höhen aufgeteilt, den entsprechende unterschiedliche Höhen des Aufnahmekanals der Hülle gegenüberstehen. Durch diesen Symmetriebruch wird erreicht, daß das Chipkarten-Lesemodul immer nur mit einer bestimmten Orientierung (sonny side up) in die Hülle eingeschoben werden kann.

Gemäß einer weiteren bevorzugten Ausführungsform des erfindungsgemäßen Chipkarten-Lesemoduls ist die Hülle mit einem Aufnahmebereich für ein Identifikationsmodul bzw. Zugangsmodul (SIM/SAM) versehen. In einem derartigen Identifikationsmodul können kryptographische Daten gespeichert sein, die einen Transfer von Datensignalen von dem Chipkarten-Lesemodul zur Hülle und in umgekehrter Richtung nur bei erfolgreicher Identifikation einer Person durch Abgabe eines entsprechenden Identifikationssignals oder Identifikationscodes erfolgt. Das Identifikationsmodul kann dabei so betrieben werden, daß es eine Frequenzanalyse von über ein Mikrophon eingegebenen Worten einer entsprechenden Person vornimmt und mit Hilfe von Mustererkennungsverfahren bestimmte Personen eines vorherbestimmten Personenkreises identifizieren kann, oder es kann so ausgelegt sein, daß es bei Eingabe einer bestimmten Zahlenkombination über ein nicht dargestelltes Eingabefeld einen Datentransfer zum Chipkarten-Lesemodul ermöglicht. Anstelle eines Identifikationsmoduls kann alternativ auch ein ROS-Modul (Record On Silicon-Modul) in diesen Aufnahmebereich eingebracht werden und so über die Hülle mit dem Chipkarten-Lesemodul gekoppelt werden. Derartige, mit mindestens einem Chip versehene Module weisen eine sehr große Speicherkapazität auf und werden insbesondere für das Speichern von Software oder Bilddaten (Photo, Video) verwendet.

Sowohl das erfindungsgemäße Chipkarten-Lesemodul als auch die Hülle können zum Zweck der Kombination bzw. dem Datentransfer mit einer anderen Vorrichtung bzw. mit einem anderen Computer mit einer Antenne versehen sein. Dies setzt voraus, daß eine entsprechende weitere Antenne an der anderen Vorrichtung bzw. dem anderen Computer vorgesehen ist und beide Vorrichtungen mit Einrichtung zum Modulieren/Demodulieren von elektromagnetischen Wellen einer geeigneten Frequenz versehen sind. Durch ein entsprechendes vorzugsweise codiertes Signalübertragungsverfahren wird ermöglicht, daß das Chipkarten-Lesemodul bzw. die Hülle zum Zweck der Kommunikation mit einem anderen Computer nicht in direkten physikalischen Kontakt mit diesem gebracht werden muß, sondern daß eine entsprechende Signalübertragung auch dann durchgeführt werden kann, wenn sich Chipkarten-Lesemodul bzw. Hülle nur in einer näheren Umgebung, in der Regel im Bereich weniger Meter, von dem Computer bzw. der anderen Vorrichtung entfernt befinden. Im Falle einer Kontoführung wird es dadurch ermöglicht, einen bestimmten Betrag von einem auf der Chipkarte geführten Konto durch einfaches Vorbeigehen an einer mit einem entsprechenden Computer versehenen Kasse vorzunehmen. Eine derartige Ausführungsform bietet darüber hinaus den Vorteil, daß die für einen Datentransfer zu oder von der Chipkarte benötigte Energie von einer entsprechenden, mit einer Antenne versehenen Vorrichtung in Form von elektromagnetischen Wellen geeigneter Frequenz geliefert werden kann, so daß die Chipkarte in diesem Fall keine interne Stromquelle aufweisen muß. Anstelle einer Antenne kann auch eine Einrichtung für eine kapazitive oder induktive Kopplung vorgesehen sein.

Ebenfalls zum Zweck der Kommunikation bzw. dem Datentransfer mit einer anderen Vorrichtung bzw. mit einem anderen Computer kann das erfindungsgemäße Chipkarten-Lesemodul oder die Hülle mit einem Infrarotsender/-Empfänger versehen sein. In analoger Weise wie bei der Antenne können damit mit Hilfe modulierter Lichtsignale Datensignale im Bereich einer vorherbestimmten Entfernung zwischen der Chipkarte und einem Computer ausgetauscht werden, ohne daß es notwendig ist, das Chipkarten-Lesemodul bzw. die Hülle in direkten Kontakt mit dem Computer zu bringen.

Im folgenden wird die Erfindung anhand zweier vorteilhafter Ausführungsformen erläutert, die in der Zeichnung dargestellt sind. Es zeigt:
- Fig. 1: eine Draufsicht des erfindungsgemäßen Chipkarten-Lesemoduls und der entsprechenden Hülle, wobei nicht einsehbare Bereiche gestrichelt dargestellt sind, gemäß einer ersten Ausführungsform; und
- Fig. 2: eine analoge Ansicht einer zweiten Ausführungsform.

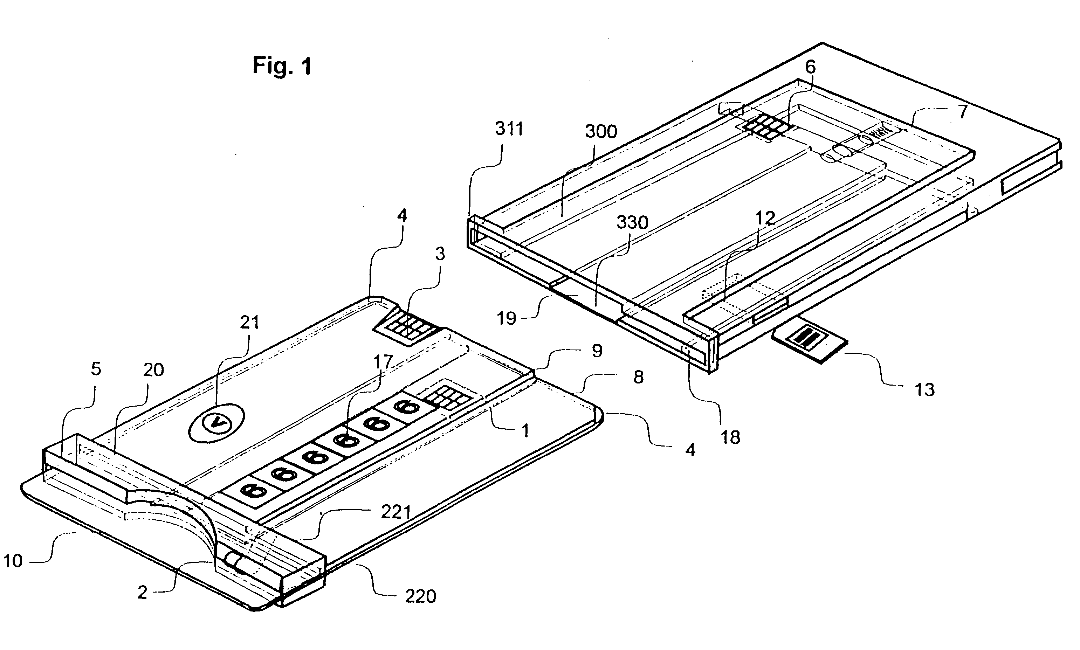

Das in Fig. 1 dargestellte erfindungsgemäße Chipkarten-Lesemodul 20 weist einen eine Chipkarte 10 aufnehmenden Kanal 5 auf, in den die Chipkarte 10 soweit eingeschoben wird, bis sie durch dreiecksförmige Nase 4 des Chipkarten-Lesemoduls in diesem fixiert ist. Das Chipkarten-Lesemodul weist einen nicht dargestellten Lesekopf zum Lesen des Chips 1 der Chipkarte 10 auf. Über eine nicht dargestellte interne CPU werden von dem Lesekopf aus dem Chip 1 ausgelesene Datensignale an eine Modulkontaktfläche 3 angelegt, die in einem spitzen Winkel zur Oberfläche des Chipkarten-Lesemoduls steht. Das Chipkarten-Lesemodul weist eine Andruckfeder 2 auf, die in eingeführtem Zustand der Chipkarte in dem Chipkarten-Lesemodul mit den dreiecksförmigen Nasen zusammenwirkt und eine stabile Lage des Chips 1 unterhalb des nicht dargestellten Lesekopfes sicherstellt. Das Chipkarten-Lesemodul weist einen hinteren Bereich 220 auf, mit einer Vorderkante 221. Außerdem ist die obere Oberfläche des Chipkarten-Lesemoduls in zwei Bereiche 8, 9 mit unterschiedlicher Höhe aufgeteilt.

Das erfindungsgemäße Chipkarten-Lesemodul ist so ausgestattet, daß es insgesamt in eine Hülle 300 einschiebbar ist, wobei diese Hülle insgesamt mit Ausnahme eines Kragens 311 in die Aufnahmeöffnung eines Computers einschiebbar ist und zu diesem Zweck an der vorderen Seitenfläche mit entsprechenden Kontakteinrichtungen versehen ist. Wird das Chipkarten-Lesemodul 20 in einen entsprechenden Aufnahmekanal 330 der Hülle eingeschoben, so grenzt der Kragen 311 der Hülle 300 an die Vorderkante 221 des hinteren Bereichs 220 des Chipkarten-Lesemoduls 20. durch Ausbildung unterschiedlicher Höhen 18, 19 des Aufnahmekanals 330 der Hülle 300, welche Höhen den unterschiedlichen Höhen der zwei Bereich 8, 9 des Chipkarten-Lesemoduls entsprechen, wird erreicht, daß das Chipkarten-Lesemodul nur mit einer vorherbestimmten Orientierung in den Aufnahmekanal 330 eingeschoben werden kann. Ist das Chipkarten-Lesemodul in den Aufnahmekanal 330 der Hülle eingeschoben, so kommt die Modulkontaktfläche 3 unterhalb der Hüllenkontaktfläche 6 zu liegen, wobei beide Kontaktflächen in sicherem elektrischen Kontakt zueinander stehen. An dem dem Kragen 311 gegenüberliegenden Ende des Aufnahmekanals 330 weist die Hülle 300 eine Einrast/Auswurf-Einrichtung 7 auf, mit der das Chipkarten-Lesemodul 20 in der Hülle 300 bei Einschieben fest eingerastet wird, und mit deren Hilfe bei erneutem Druck auf die Chipkarten-Lesevorrichtung in Einschubrichtung in die Hülle 300 ein Auswerfen des Chipkarten-Lesemoduls 20 bewirkt wird.

Die Hülle 300 weist einen Aufnahmebereich 12 für ein Identifikationsmodul 13 auf, das nur bei Eingabe eines vorherbestimmten Codes einen Datentransfer von dem Chipkarten-Lesemodul in Richtung Hülle und in umgekehrter Richtung ermöglicht. Auf diese Weise wird ein Mißbrauch des Chipkarten-Lesemoduls durch Personen, die den speziellen Code des Identifikationsmoduls nicht kennen, ausgeschlossen. Die in dem Chipkarten-Lesemodul nicht dargestellte integrierte CPU wird von einer ebenfalls nicht dargestellten Batterie gespeist. Die CPU ist mit einer Anzeige 17 verbunden, die über einen Shift-Knopf 21 steuerbar ist. Durch wiederholten Druck auf den Shift-Knopf 21 werden in vorhergegebener Reihenfolge unterschiedliche, auf der Chipkarte 10 gespeicherte Daten an der Anzeige 17 angezeigt.

Die Hülle 300 ist zum Zweck des Datentransfers mit einer anderen Vorrichtung bzw. mit einem anderen Computer intern mit einer nicht dargestellten integrierten Antenne versehen, die von einer in der Hülle 300 ebenfalls nicht dargestellten integrierten Sender- und Empfangseinheit betrieben wird, von einer ebenfalls nicht dargestellten Batterie gespeist wird. Diese Sendereinheit sendet die auf einem ebenfalls nicht dargestellten, in der Hülle 300 integrierten Speicherchip gespeicherten Daten an einen anderen, ebenfalls mit einer Antenne versehenen Computer. Die Senderund Empfangseinheit ist zu diesem Zweck über geeignete elektrische Schnittstellen und Wandlereinrichtungen elektrisch mit dem nicht dargestellten Speicherchip verbunden.

Wird die Hülle 300 in die Aufnahmeöffnung eines Computers eingeschoben, wobei über entsprechende Kontakteinrichtungen ein direkter elektrischer Kontakt hergestellt wird, so wird die Antenne nicht aktiviert. In diesem Fall werden die auf dem nicht dargestellten Speicherchip in der Hülle 300 gespeicherten Datensignale direkt an den Computer weitergegeben. Auf diese Weise ergibt sich ein Datentransfer von Daten, die auf dem Chip 1 der Chipkarte 10 gespeichert sind, über die CPU der Chipkarten-Lesevorrichtung in Einschubrichtung in die Hülle 300 ein Auswerfen des Chipkarten-Lesemoduls 20 bewirkt wird.

Wird die Hülle 300 in die Aufnahmeöffnung eines Computers eingeschoben, wobei über entsprechende Kontakteinrichtungen ein direkter elektrischer Kontakt hergestellt wird, so wird die Antenne nicht aktiviert. In diesem Fall werden die auf dem nicht dargestellten Speicherchip in der Hülle 300 gespeicherten Datensignale direkt an den Computer weitergegeben. Auf diese Weise ergibt sich ein Datentransfer von Daten, die auf dem Chip 1 der Chipkarte 10 gespeichert sind, über die CPU des Chipkarten-Lesemoduls und die Modulkontaktfläche 3, die Hüllenkontaktfläche 6, den nicht dargestellten Speicherchip in der Hülle 300 und die elektrische Kontakteinrichtung an der Hülle 300 und an dem Computer, auf den Computer und in umgekehrter Richtung.

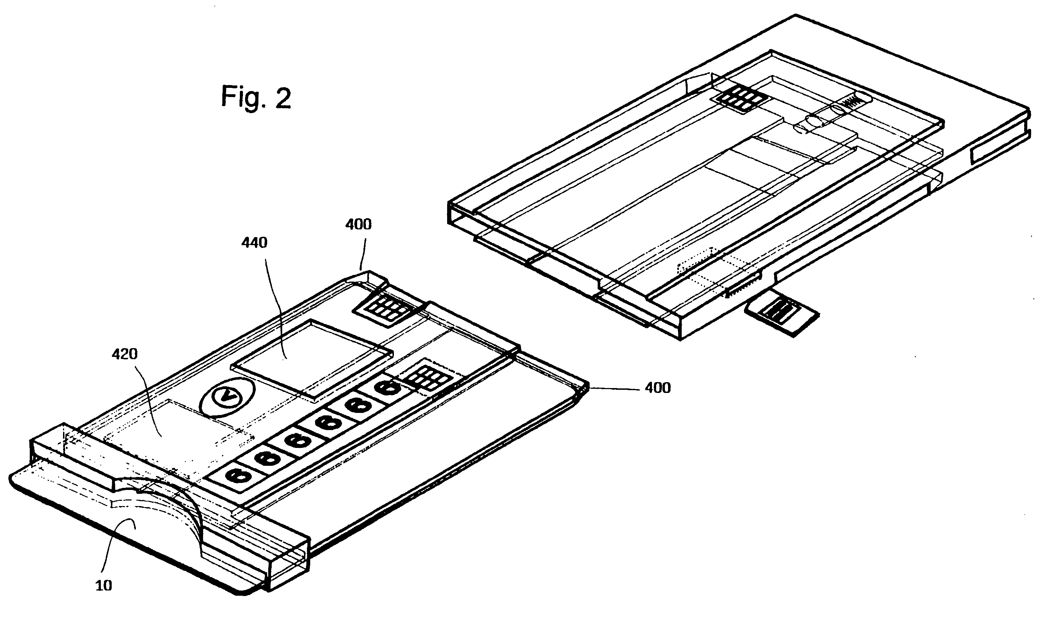

Die in Fig. 2 dargestellte Ausführungsform ist der nach Fig. 1 sehr ähnlich; es konnte jedoch auf den Kragen 311 verzichtet werden, da die schmalen Seitenflächen der Hülle 300 durch dünne Bleche geschlossen sind und somit eine Führung für den Lesemodul bilden. Die Hülle 300 ragt, wenn sie in den Aufnahmeschacht eines Computers eingesteckt ist, nicht oder kaum aus diesem heraus. Die Einführung des Lesemoduls in die Hülle 300 wird dadurch erleichtert, daß am vorderen Ende des Lesemoduls schräge Phasen 400 angebracht sind.

Der Lesemodul bildet seinerseits für eine in ihn eingeschobene Chipkarte 10 eine Schutzhülle. Diese Schutzhülle ist einerseits flexibel, so daß der gesamte Lesemodul mit der eingeführten Chipkarte bequem in der Tasche eines Kleidungsstücks transportiert werden kann. Andererseits ist diese Hülle im Bereich der Kontakte der Chipkarte versteift, um die Chipkarte in ihrem empfindlichsten Bereich zu schützen.

Solange der Lesemodul nicht in die Hülle 300 eingeschoben ist, bleibt die Chipkarte 10 vorzugsweise innerhalb des Aufnahmekanals des Lesemoduls in einer Stellung, bei welcher ein geringer Abstand zwischen den Kontakten der Chipkarte und dem Lesekopf des Lesemoduls verbleibt. Nach dem Einschieben des Lesemoduls in die Hülle 300, oder zwangsgeführt durch den Vorgang des Einschiebens in die Hülle 300, wird die Chipkarte mit ihren Kontakten an den Lesekopf im Inneren des Aufnahmekanals des Lesemoduls angedrückt.

Beiden Ausführungsformen sind weitere Besonderheiten gemeinsam. Insbesondere kann der Lesemodul außer der Anzeige 17 weitere Einrichtungen aufweisen. Er ist bei der bevorzugten Ausführungsform mit einer Folienbatterie 420 ausgestattet, die einen autonomen Betrieb des Lesemoduls ermöglicht. Die Folienbatterie 420 wird nach Einschieben des Lesemoduls in die Hülle 300 über deren elektrische Kontakte aus der Stromversorgung des Computers aufgeladen. Ferner ist der Lesemodul mit einem flächigen optischen Abtastelement 440 versehen, daß an der Oberfläche des Lesemoduls zugänglich ist. Ein solches Abtastelement dient in Verbindung mit einer elektronischen Auswerteeinrichtung der Identifikation eines Fingerabdrucks.

Bei beiden Ausführungsformen können Maßnahmen vorgesehen werden, um den Lesemodul, nachdem er in die Hülle 300 eingeschoben ist, in dieser lösbar zu verrasten.

## Patentansprüche

1. Chipkarten-Lesegerät mit einem ersten, mobilen Lesemodul (20), das einen eine Chipkarte (10) aufnehmenden Kanal (5) aufweist, in dem ein Lesekopf zum Lesen der Chipkarte (10) angeordnet ist, **dadurch gekennzeichnet, daß** das erste Lesemodul (20) einen vorderen Bereich und einen hinteren Bereich (220) aufweist, der kürzer als der vordere Bereich ist, und daß das Lesegerät ein zweites Modul in Form einer Hülle (300) mit einem vorderen Bereich und einem Aufnahmekanal (330) umfaßt, in den der vordere Bereich des Lesemoduls (20) einschiebbar ist, wobei der vordere Bereich der Hülle (300) in einen Aufnahmeschacht eines Computers einführbar ist und Höhe und Breite dieses vorderen Bereichs um soviel kleiner als diejenigen des Aufnahmeschachtes ausgelegt sind, daß er schlüssig in den Aufnahmeschacht des Computers einführbar ist, wobei ferner die Hülle an ihrem vorderen Ende eine Kontaktleiste zur Verbindung mit einer entsprechenden Kontaktleiste im Aufnahmeschacht des Computers aufweist und die Hülle Kontakte zur Verbindung mit entsprechenden Kontakten des Lesemoduls aufweist.

2. Lesegerät nach Anspruch 1, **dadurch gekennzeichnet, daß** am Ende (6) des vorderen Bereichs des die Chipkarte aufnehmenden Kanals (5) zur seitlichen Fixierung der Chipkarte (10) zwei im Querschnitt dreiecksförmige Nasen (4) angeordnet sind, deren jeweils nach innen weisende Flächen an den abgerundeten Eckseiten der eingeschobenen Chipkarte zu liegen kommen.

3. Lesegerät nach einem der vorhergehenden Ansprüche, **dadurch gekennzeichnet, daß** die Hülle (300) an dem dem Kragen (311) gegenüberliegenden Ende des Aufnahmekanals (330) eine Einrast/Auswurf-Einrichtung (7) zum Einrasten bzw. Auswerfen des in sie eingeführten Chipkarten-Lesemoduls aufweist.

4. Lesegerät nach einem der vorhergehenden Ansprüche, **dadurch gekennzeichnet, daß** auf dem Modul eine von einer Batterie gespeiste, mit einem den Chip (1) kontaktierenden Lesekopf zum Lesen der Chipkarte verbundene CPU in dem Chipkarten-Lesemodul (20) vorgesehen ist.

5. Lesegerät nach einem der vorhergehenden Ansprüche, **dadurch gekennzeichnet, daß** die CPU zum Zweck der Abfrage von auf der Chipkarte (10) gespeicherten Daten mit einer Anzeige (17) verbunden ist, die über einen Schalter oder einen Shift-Knopf (21) steuerbar ist.

6. Lesegerät nach einem der vorhergehenden Ansprüche, **dadurch gekennzeichnet, daß** die Chipkarte (10) auf einer ihrer Oberflächen eine mit der CPU verbundene Modulkontaktfläche (3) aufweist, die bei in den Aufnahmekanal (330) der Hülle (300) eingeschobenem Zustand mit einer entsprechenden Hüllenkontaktfläche (6) an einer Innenfläche des Aufnahmekanals (330) in Kontakt tritt.

7. Lesegerät nach einem der vorhergehenden Ansprüche, **dadurch gekennzeichnet, daß** die Kontaktflächen (3, 6) größer und/oder robuster als die Kontaktflächen des Chips (1) ausgebildet sind.

8. Lesegerät nach einem der vorhergehenden Ansprüche, **dadurch gekennzeichnet, daß** die Kontaktflächen (3, 6) in einem spitzen Winkel zu einer Oberfläche des Chipkarten-Lesemoduls (20) bzw. zu einer der Innenflächen der Hülle (300) stehen.

9. Lesegerät nach einem der vorhergehenden Ansprüche, **dadurch gekennzeichnet, daß** mindestens eine Oberfläche des Chipkarten-Lesemoduls in mindestens zwei Bereiche (8, 9) mit unterschiedlichen Höhen aufgeteilt ist, denen entsprechende unterschiedliche Höhen (18, 19) des Aufnahmekanals (330) der Hülle (300) gegenüberstehen.

10. Lesegerät nach einem der vorhergehenden Ansprüche, **dadurch gekennzeichnet, daß** die Hülle (300) mit einem Aufnahmebereich (12) für ein Identifikationsmodul bzw. einem Zugangsmodul (SIM/SAM) (13) versehen ist.

11. Lesegerät nach einem der vorhergehenden Ansprüche, **dadurch gekennzeichnet, daß** die Hülle (300) zum Zweck der Kommunikation bzw. dem Datentransfer mit einer anderen Vorrichtung bzw. mit einem anderen Computer mit einer Antenne versehen ist.

12. Lesegerät nach einem der vorhergehenden Ansprüche, **dadurch gekennzeichnet, daß** die Hülle (300) zum Zweck der Kommunikation bzw. dem Datentransfer mit einer anderen Vorrichtung bzw. einem anderen Computer mit einem Infrarotsender/-Empfänger versehen ist.

13. Lesegerät nach einem der vorhergehenden Ansprüche, **dadurch gekennzeichnet, daß** das Chipkarten-Lesemodul (20) zum Zweck der Kommunikation bzw. dem Datentransfer mit einer anderen Vorrichtung bzw. mit einem anderen Computer mit einer Antenne versehen ist.

14. Lesegerät nach einem der vorhergehenden Ansprüche, **dadurch gekennzeichnet, daß** das Chipkarten-Lesemodul (20) zum Zweck der Kommunikation bzw. dem Datentransfer mit einer anderen Vorrichtung bzw. einem anderen Computer mit einem Infrarotsender/-Empfänger versehen ist.

15. Lesegerät nach einem der vorhergehenden Ansprüche, **dadurch gekennzeichnet, daß** das Lesemodul eine flexible Schutzhülle für die Chipkarte bildet, die im Bereich der Kontakte auf der Chipkarte versteift ist.

16. Lesegerät nach Anspruch 15, **dadurch gekennzeichnet, daß** die Chipkarte im Kanal des Lesemoduls in einer Stellung gehalten werden kann, in der ihre Kontakte im Abstand von dem Lesekopf gehalten sind.

17. Lesegerät nach Anspruch 16, **dadurch gekennzeichnet, daß** bei Einführung des Lesemoduls in die Hülle (300) die Chipkarte mit ihren Kontakten in Anlage an den Lesekopf bewegt wird.

18. Lesegerät nach einem der vorhergehenden Ansprüchen, **dadurch gekennzeichnet, daß** das Lesemodul mit einem an seiner Oberfläche zugänglichen optischen Abtastelement versehen ist.

19. Lesegerät nach einem der vorhergehenden Ansprüchen, **dadurch gekennzeichnet, daß** das Lesemodul mit einer autonomen Stromversorgung in Form einer Folienbatterie ausgestattet ist.

20. Lesegerät nach Anspruch 19, **dadurch gekennzeichnet, daß** die Folienbatterie nach Einschieben des Lesemoduls in die Hülle über deren Kontakte aus der Stromversorgung des Computers aufladbar ist.

## Claims

1. Chip card reader with a first, mobile reading module (20) having a channel (5) for accommodating a chip card (10) in which is arranged a reading head for reading the chip card (10), **characterized in that** the first reading module (20) has a front area and a rear area (220) which is shorter than the front area, and that the reader comprises a second module in the form of a sleeve (300) having a front area and an accommodation channel (330) into which the front area of the reading module (20) can be inserted, the front area of the sleeve (300) being able to be inserted into an accommodation slot of a computer, and the height and the width of said front area being designed sufficiently smaller than those of the accommodation slot so that it can be inserted snugly into the accommodation slot of the computer, the sleeve furthermore having at its front end a contact strip for connection to a corresponding contact strip in the accommodation slot of the computer, and the sleeve having contacts for connection with corresponding contacts of the reading module.

2. Reader according to claim 1, **characterized in that** at the end (6) of the front area of the channel (5) for accommodating the chip card, for the purpose of lateral fixing of the chip card (10) two lugs (4), triangular in cross-section, are arranged, the inward pointing surfaces of each of which come to abut against the rounded comer sides of the inserted chip card.

3. Reader according to either one of the preceding claims, **characterized in that** the sleeve (300) at the end of the accommodation channel (330) opposite the collar (311) has a latch-in/ejection device (7) for latching-in and ejecting the chip card reading module inserted into it.

4. Reader according to any one of the preceding claims, **characterized in that** on the module a battery-powered CPU connected to a reading head contacting the chip (1) for reading the chip card is provided in the chip card reading module (20).

5. Reader according to any one of the preceding claims, **characterized in that** for the purpose of interrogation of data stored on the chip card (10) the CPU is connected to a display (17) which can be controlled by either a switch or a shift button (19).

6. Reader according to any one of the preceding claims, **characterized in that** the chip card (10) on one of its surfaces has a module contact surface (3) which is connected to the CPU and which on insertion into the accommodation channel (330) of the sleeve (300), makes contact with a corresponding sleeve contact surface (6) at an inner surface of the accommodation channel (330).

7. Reader according to any one of the preceding claims, **characterized in that** the contact surfaces (3, 6) are made larger and/or more robust than the contact surfaces of the chip (1).

8. Reader according to any one of the preceding claims, **characterized in that** the contact surfaces (3, 6) are arranged at an acute angle with respect to a surface of the chip card reading module (20), or to one of the inner surfaces of the sleeve (300).

9. Reader according to any one of the preceding claims, **characterized in that** at least one surface of the chip card reading module is divided into at least two areas (8, 9) of different height, which are opposed by corresponding different heights (18, 19) in the accommodation channel (330) of the sleeve (300).

10. Reader according to any one of the preceding claims, **characterized in that** the sleeve (300) is provided with a receiving area (12) for an identification module or an access module (SIM/SAM) (13).

11. Reader according to any one of the preceding claims, **characterized in that** the sleeve (300), for the purpose of communication or data transfer with another device or another computer is equipped with an antenna.

12. Reader according to any one of the preceding claims, **characterized in that** the sleeve (300), for the purpose of communication or data transfer with another device or another computer is equipped with an infrared transmitter/receiver.

13. Reader according to any one of the preceding claims, **characterized in that** the chip card reading module (20), for the purpose of communication or data transfer with another device or another computer is equipped with an antenna.

14. Reader according to any one of the preceding claims, **characterized in that** the chip card reading module (20), for the purpose of communication or data transfer with another device or another computer is equipped with an infrared transmitter/receiver.

15. Reader according to any one of the preceding claims, **characterized in that** the reading module forms a flexible protective cover for the chip card, which is reinforced in the area of the contacts on the chip card.

16. Reader according to claim 15, **characterized in that** the chip card in the channel of the reading module can be held in a position where its contacts are kept at a distance from the reading head.

17. Reader according to claim 16, **characterized in that** when the reading module is inserted into the sleeve (300), the chip card is moved to abut with its contacts against the reading head.

18. Reader according to any one of the preceding claims, **characterized in that** the reading module is provided with an optical scanning element which is accessible at its surface.

19. Reader according to any one of the preceding claims, **characterized in that** the reading module is provided with an autonomous power supply in the form of a foil battery.

20. Reader according to claim 19, **characterized in that** the foil battery after insertion of the reading module into the sleeve can be recharged via its contacts from the power supply of the computer.

## Revendications

1. Lecteur de cartes à puce comportant un premier module de lecture (20) mobile qui présente un canal (5) recevant une carte à puce (10), dans lequel est agencé une tête de lecture pour lire la carte à puce (10), **caractérisé en ce que** le premier module de lecture (20) présente une zone antérieure et une zone postérieure (220) qui est plus courte que la zone antérieure, et **en ce que** le lecteur comprend un deuxième module sous forme d'une enveloppe (300) avec une zone antérieure et un canal de réception dans lequel on peut insérer la zone antérieure du module de lecture (20), la zone antérieure de l'enveloppe (300) étant susceptible d'être introduite dans une fente de réception d'un ordinateur et la hauteur et la largeur de cette zone antérieure étant conçues d'autant plus petites que celles de la fente de réception qu'elle peut être introduite en affleurement dans la fente de réception de l'ordinateur, l'enveloppe présentant en outre à son extrémité antérieure une réglette de contact destinée à être connectée à une réglette de contact correspondante dans la fente de réception de l'ordinateur, et l'enveloppe présentant des contacts destinés à être connectés à des contacts correspondants du module de lecture.

2. Lecteur selon la revendication 1, **caractérisé en ce qu'**à l'extrémité (6) de la zone antérieure du canal (5) recevant la carte à puce sont agencés deux ergots (4) à section de forme triangulaire destinés à la fixation latérale de la carte à puce (10), dont les surfaces respectives tournées vers l'intérieur viennent en appui sur des côtés en coins arrondis de la carte à puce insérée.

3. Lecteur selon l'une quelconque des revendications précédentes, **caractérisé en ce qu'**à l'extrémité du canal de réception (330), qui est opposée à la collerette (311), l'enveloppe (300) présente un dispositif de verrouillage/d'éjection (7) pour verrouiller et éjecter le module de lecteur de carte à puce introduit dans celui-ci.

4. Lecteur selon l'une quelconque des revendications précédentes, **caractérisé en ce que** sur le module, une unité centrale alimentée par une pile et reliée à une tête de lecture contactant la puce (1) pour lire la carte à puce est prévue dans le module de lecture de carte à puce (20).

5. Lecteur selon l'une quelconque des revendications précédentes, **caractérisé en ce que** dans le but d'interroger les données mémorisées sur la carte à puce (10), l'unité centrale est reliée à un affichage (17) qui peut être commandé par un commutateur ou un bouton de commutation (21).

6. Lecteur selon l'une quelconque des revendications précédentes, **caractérisé en ce que** la carte à puce (10) présente sur l'une de ses surfaces une surface de contact (3) de module, connectée à l'unité centrale, laquelle, lorsqu'elle est insérée dans le canal de réception (330) de l'enveloppe (300), entre en contact avec une surface de contact (6) d'enveloppe correspondante sur une surface intérieure du canal de réception (330).

7. Lecteur selon l'une quelconque des revendications précédentes, **caractérisé en ce que** les surfaces de contact (3, 6) sont réalisées plus grandes et/ou plus robustes que les surfaces de contact de la puce (1).

8. Lecteur selon l'une quelconque des revendications précédentes, **caractérisé en ce que** les surfaces de contact (3, 6) sont situées en angle aigu par rapport à une surface du module de lecture (20) de cartes à puce ou par rapport à l'une des surfaces intérieures de l'enveloppe (300).

9. Lecteur selon l'une quelconque des revendications précédentes, **caractérisé en ce qu'**au moins une surface du module de lecture de cartes à puce est divisé en au moins deux zones (8, 9) de différentes hauteurs, auxquelles sont opposées différentes hauteurs correspondantes (18, 19) du canal de réception (330) de l'enveloppe (300).

10. Lecteur selon l'une quelconque des revendications précédentes, **caractérisé en ce que** l'enveloppe (300) est pourvue d'une zone de réception (12) pour un module d'identification ou pour un module d'accès (SIM/SAM) (13).

11. Lecteur selon l'une quelconque des revendications précédentes, **caractérisé en ce que** l'enveloppe (300) est pourvue d'une antenne, dans le but de communication ou de transfert de données avec un autre dispositif ou un autre ordinateur.

12. Lecteur selon l'une quelconque des revendications précédentes, **caractérisé en ce que** l'enveloppe (300) est pourvue d'un émetteur/récepteur à infrarouge, dans le but de communication ou de transfert de données avec un autre dispositif ou un autre ordinateur.

13. Lecteur selon l'une quelconque des revendications précédentes, **caractérisé en ce que** le module de lecture de cartes à puce (20) est pourvu d'une antenne, dans le but de communication ou de transfert de données avec un autre dispositif ou un autre ordinateur.

14. Lecteur selon l'une quelconque des revendications précédentes, **caractérisé en ce que** le module de lecture de cartes à puce (20) est pourvu d'un émetteur/récepteur à infrarouge, dans le but de communication ou de transfert de données avec un autre dispositif ou un autre ordinateur.

15. Lecteur selon l'une quelconque des revendications précédentes, **caractérisé en ce que** le module de lecture forme une enveloppe de protection flexible pour la carte à puce qui est rigidifiée dans la zone des contacts sur la carte à puce.

16. Lecteur selon l'une quelconque des revendications précédentes, **caractérisé en ce que** la carte à puce peut être maintenue dans le canal du module de lecture dans une position dans laquelle ses contacts sont tenus à distance de la tête de lecture.

17. Lecteur selon l'une quelconque des revendications précédentes, **caractérisé en ce que** lorsqu'on introduit le module de lecture dans l'enveloppe (300), la carte à puce est amenée avec ses contacts en appui contre la tête de lecture.

18. Lecteur selon l'une quelconque des revendications précédentes, **caractérisé en ce que** le module de lecture est pourvu d'un élément de balayage optique accessible à sa surface.

19. Lecteur selon l'une quelconque des revendications précédentes, **caractérisé en ce que** le module de lecture est équipé d'une alimentation en courant autonome sous forme d'une pile en feuille.

20. Lecteur selon la revendication 19, **caractérisé en ce qu'**après avoir inséré le module de lecture dans l'enveloppe, la pile en feuille peut être rechargée via ses contacts par l'alimentation en courant de l'ordinateur.
